Europäisches Patentamt

European Patent Office

Office européen des brevets

(19)

(11) Numéro de publication: **0 133 093**
**B1**

(12) **FASCICULE DE BREVET EUROPEEN**

(45) Date de publication du fascicule du brevet:
22.04.87

(51) Int. Cl.⁴: **B 29 D 30/08**

(21) Numéro de dépôt: **84401472.0**

(22) Date de dépôt: **11.07.84**

(54) **Procédé de fabrication d'un pneumatique pour bicyclette de sport et pneumatique ainsi réalisé.**

(30) Priorité: **22.07.83 FR 8312201**
**19.04.84 FR 8406241**

(43) Date de publication de la demande:
**13.02.85 Bulletin 85/7**

(45) Mention de la délivrance du brevet:
**22.04.87 Bulletin 87/17**

(84) Etats contractants désignés:
**BE CH DE GB IT LI NL**

(56) Documents cités:
**FR - A - 2 421 050**
**US - A - 1 734 241**
**US - A - 1 855 560**
**US - A - 2 676 637**

(73) Titulaire: **Marquet, Christian Jean Roger, 58 rue Jules Vallès, F-93600 Aulnay Sous Bois (Seine Saint Denis) (FR)**

(72) Inventeur: **Marquet, Christian Jean Roger, 58 rue Jules Vallès, F-93600 Aulnay Sous Bois (Seine Saint Denis) (FR)**

(74) Mandataire: **Cabinet BERT, DE KERAVENANT & HERRBURGER, 115, Boulevard Haussmann, F-75008 Paris (FR)**

**Description**

La présente invention concerne un procédé de fabrication d'un pneumatique pour bicyclette de sport et le pneumatique ainsi réalisé selon le préambule de la revendication 1 et 9.

Un tel procédé et pneumatique avec les caractéristiques du préambule des revendications 1 et 9 est connu de la demanderesse. Cependant aucun document illustrant cet état de la technique est porté à sa connaissance.

De façon générale, les bicyclettes de sport ou de compétition ont des roues équipées de pneumatiques de type «boyau».

Parallèlement à ce type de pneumatique, les bicyclettes de randonnée sont généralement équipées de pneumatiques entourant une chambre à air non emprisonnée définitivement dans la carcasse du pneumatique. En effet, comme pour ce type de bicyclette, les questions du poids et des caractéristiques de roulement ne sont pas de première importance, il est préférable de tirer profit du coût moindre de ce type de pneumatique et de la facilité de réparer ou de remplacer une chambre à air en cas de crevaison.

Au cours des dernières années des tentatives ont été faites pour tenter de remplacer le boyau dans les utilisations les plus courantes en compétition ou à l'entraînement. Ce type de pneumatique est en fait une simple réduction du pneumatique habituel: il se compose d'une carcasse en bandes de toiles revêtues de caoutchouc avec une bande de roulement, l'ensemble ainsi confectionné étant vulcanisé. Cette technique de fabrication correspond à la technique traditionnelle.

Un tel pneumatique même relativement léger ne peut donner les mêmes résultats et les mêmes caractéristiques de roulement qu'un boyau de sorte qu'il n'est utilisé actuellement que par certains amateurs.

Comme traditionnellement, les talons d'un pneumatique sont renforcés par un arceau en fils de fer, qui est relativement lourd (de l'ordre de 40 g pour les deux arceaux), il a été proposé de remplacer les arceaux par des fils souples plus légers et permettant de plier le pneu pour le fixer en réserve sous la selle.

Malgré la souplesse de tels arceaux, les caractéristiques de soulèvement n'ont pas été améliorées.

La présente invention a pour but de créer un pneumatique ne faisant pas corps avec la chambre à air et qui présente des caractéristiques d'utilisation et de roulement proches de celles d'un boyau tout en conservant les avantages du système chambre à air – pneumatique habituel.

A cet effet, l'invention a pour objet un procédé de fabrication d'un pneumatique non vulcanisée pour roue de bicyclette, à jante étroite, ce pneumatique étant destiné à recevoir une chambre à air, procédé caractérisé en ce qu'on réalise sur un cylindre de bobinage une nappe de fils juxtaposés et collés les uns aux autres, on découpe cette nappe en au moins une bande transversale en forme de parallélogramme, bande dont la longueur est au moins égale au développement du pneumatique à réaliser, et dans lesquelles les segments de fils coupés sont disposés transversalement, parallèlement aux côtés non coupés de chaque bande transversale, on réunit les extrémités d'au moins deux bandes superposées pour former un ruban continu en bande fermée formant une carcasse à deux nappes dans lequel les fils des deux nappes se croisent, on dévide de part et d'autre du plan médian, suivant deux lignes de rabattement, un fil de renforcement inextensible, très résistant à la traction, suivant plusieurs tours, on rabat les bandes latérales selon chaque ligne de rabattement contre l'extérieur de la carcasse et autour des fils de renforcement pour former les talons du pneumatique destiné à prendre appui sur la jante et on fixe par collage une bande de roulement sur la carcasse. Des caractéristiques additionnelles sont indiquées dans les revendications 2 à 8.

L'invention a également pour objet un pneumatique comprenant une carcasse avec des talons entourant du fil de renforcement, caractérisé en ce que la carcasse est formée d'au moins deux bandes transversales de fils dont les directions se croisent, symétriquement par rapport au plan méridien de symétrie du pneumatique, les bandes latérales étant rabattues sur au moins une partie de la hauteur du flanc de la carcasse pour former les talons en entourant plusieurs spires du fil de renforcement des talons. Des caractéristiques additionnelles du pneumatique sont indiquées dans les revendications 9 à 11.

Un tel pneumatique présente de multiples avantages pour l'utilisateur car ses caractéristiques sont analogues à celles d'un boyau.

Le comportement au roulement, la tenue aux démarrages brutaux, etc..., sont identiques grâce à l'effet combiné de la structure en nappes de fils parallèles et croisés, d'une part, et du fil et de la cordelette de renforcement et des talons, d'autre part, il y a interaction quasi ponctuelle entre les différents fils relativement libres qui constituent la carcasse et leur accrochage sur et autour des fils et cordelettes des talons; cela permet une grande souplesse de roulement pour absorber les irrégularités du sol, malgré la pression de gonflement élevée. Ainsi, le pneumatique combine les avantages des pneumatiques traditionnels aux caractéristiques avantageuses des boyaux.

La carcasse du pneu peut se réaliser en toute sorte de fils en coton, soie ou le cas échéant, fils synthétiques, suivant les caractéristiques recherchées.

Suivant une autre caractéristique de l'invention, on réalise des bandes latérales de largeur suffisante pour recouvrir les flancs de la carcasse jusque sous la bande de roulement.

Cela renforce les flancs tout en gardant leur souplesse.

Suivant un prolongement avantageux, on dévide un fil très résistant à la traction dans la direction périphérique, sur le cylindre entre les deux bords des bandes latérales après rabattement de celles-ci et on recouvre les spires de fils par la bande de roulement.

Grâce à ce renforcement périphérique, le pneu est très efficacement protégé contre la pénétration progressive des graviers, morceaux de verre, etc... dans la bande de roulement puisque ce renforcement périphérique gêne ou ralentit cette pénétration.

De façon particulièrement avantageuse, on découpe les bandes transversales de façon que les segments de fils soient à 45°.

Suivant une autre caractéristique, l'invention concerne un procédé décrit ci-dessus, caractérisé en ce que l'on rabat les bandes latérales sur une largeur suffisante pour qu'elles se chevauchent au niveau de la surface de roulement en formant les talons uniquement par rabattement autour des fils de renforcement et on met en place une bande de roulement.

Suivant une autre caractéristique de l'invention, les fils de renforcement sont des fils de matière synthétique pratiquement non extensible dans les conditions de leur utilisation tels que du Kevlar (marque).

Suivant une autre caractéristique de l'invention, on réalise les nappes formant la bande constituant le pneumatique à l'aide d'un fil de matière synthétique inextensible notamment du Kevlar.

L'invention concerne également un pneumatique obtenu selon le procédé ci-dessus, ce pneumatique étant caractérisé en ce qu'il se compose d'une carcasse formée par une nappe dont les bandes latérales sont rabattues pour couvrir toute la surface latérale et se chevaucher sous la surface de roulement.

Ainsi, grâce au procédé de l'invention, on peut réaliser des talons de dimensions très réduites, mais présentant la résistance nécessaire aux efforts développés dans le pneumatique. Cela permet une réduction importante du poids du pneumatique qui, dans le cas d'un fil de renforcement Kevlar est de 20 g par pneumatique.

Lorsque la chambre à air est protégée par une double couche, les bandes latérales étant rabattues sur toute la surface latérale du pneumatique et se chevauchant aussi sous la bande de roulement, il est possible d'utiliser une chambre à air en latex qui, actuellement, pèse 40 g au lieu d'une chambre à air en caoutchouc butyl qui pèse, actuellement, 80 g. On aboutit donc à une réduction totale de poids de 40 + 20 = 60 g. Or, le poids d'un pneumatique monté est de l'ordre de 220 à 240 g pour la route et de 180 à 200 g pour la piste.

Une réduction de 60 g représente donc une diminution de l'ordre de 25% à 35% du poids, ce qui est considérable. Si, de plus, les nappes sont réalisées en fils de Kevlar, et non en fils de coton, pour une même résistance, la réduction de poids est encore plus importante. En effet, un tissage non monté en coton représente 80 g et un tissage en Kevlar 20 g.

Grâce à la réduction de la section des talons du pneu, on évite le pincement de la chambre à air entre les deux talons et la formation d'une hernie périphérique rendant cette chambre à air très fragile et provoquant une usure très rapide par le frottement entre la chambre et les talons. Cette réduction de la section des talons a, en outre, l'avantage extrêmement important de permettre le remontage d'un pneu à la main.

En effet, on peut alors repousser une partie de l'un des talons dans la gorge de la jante, entre les deux épaulements de façon à réduire le rayon de la surface sur laquelle s'appuie ce talon; cela permet de tirer la partie diamétralement opposée du talon par-dessus le bord de la jante, comme cela se fait pour les pneus connus, à l'aide d'outils.

La présente invention sera décrite de façon plus détaillée à l'aide des dessins annexés, dans lesquels:

la fig. 1A est une vue schématique d'un cylindre d'enroulement pour la réalisation des bandes transversales à nappe de fils;

la fig. 1B montre une bande découpée dans le cylindre de la fig. 1A, cette bande étant présentée dans une position pivotante sensiblement à angle droit par rapport à la position de découpe sur le cylindre de la fig. 1A;

les fig. 2A, 2B, 2C montrent la réalisation d'un cylindre à partir de deux bandes transversales selon la fig. 1B;

la fig. 3A est une vue de face montrant la disposition des fils et cordelettes de renforcement;

la fig. 3B est une coupe transversale à échelle agrandie de la moitié du cylindre de la fig. 3A;

la fig. 4 est une vue analogue à celle de la fig. 3B montrant le bord rabattu vers l'extérieur;

la fig. 5 montre, selon une demi-coupe, la mise en place d'un pneumatique terminé sur une jante;

la fig. 6 est une vue en coupe d'une variante du pneumatique montrant, à droite, la position du talon de pneu selon l'invention (trait plein) et celle du talon connu créant une hernie (trait en pointillé) et, à gauche, la position montée et la position avant cette mise en place pour le talon du pneu selon l'invention (trait plein, trait en pointillé).

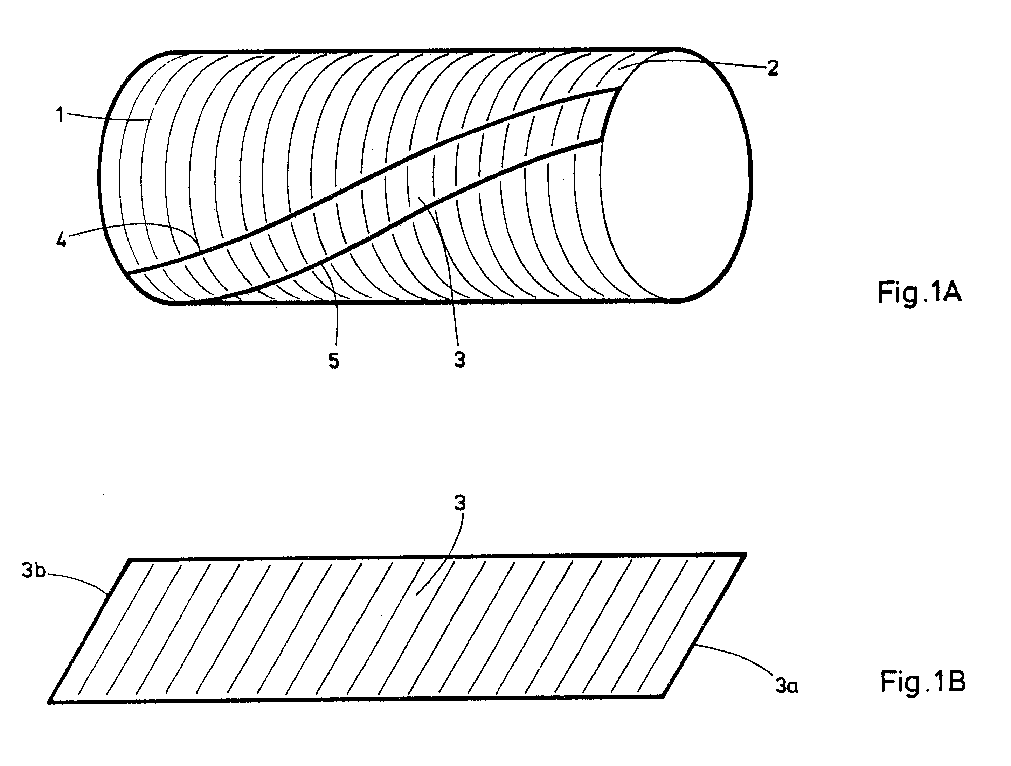

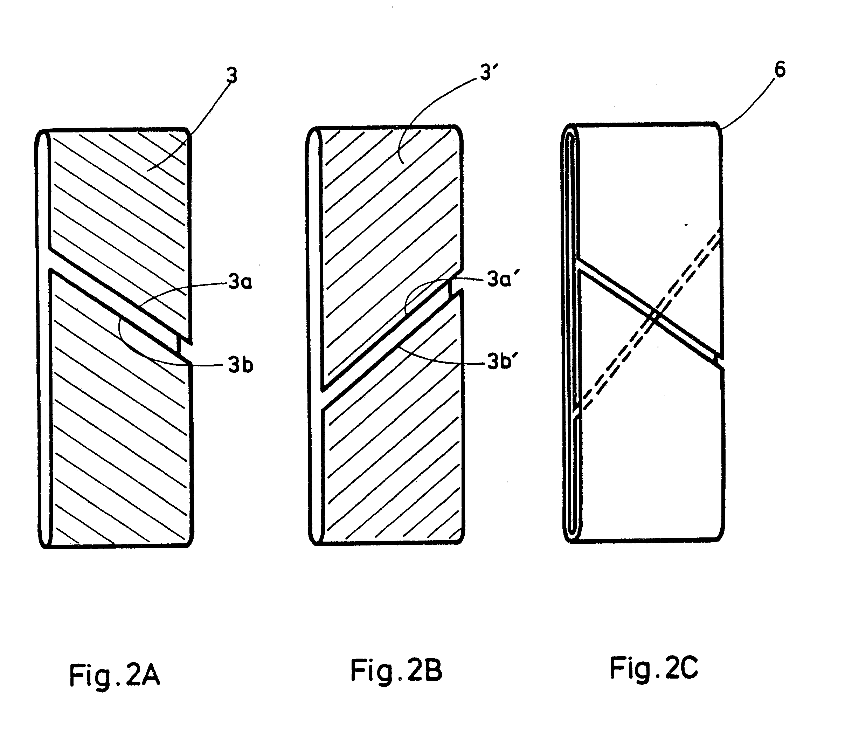

La fig. 1A qui est à une échelle plus réduite que les fig. 2A–2C, montre un cylindre de bobinage 1 sur lequel on dévide une nappe de fils de façon jointive, les diverses spires du fil 2 étant collées les unes aux autres.

La nappe de fils ainsi obtenue est découpée en bandes dites «transversales» 3, suivant des lignes de découpe 4, 5. Ces lignes 4, 5 font, de préférence, un angle de 45° avec la direction des fils 2. On obtient ainsi les bandes transversales 3, telles que celles représentées à la fig. 1B. Cette bande 3 est en forme de parallélogramme allongé et les segments de fil sont parallèles aux bords 3a, 3b des petis côtés du parallélogramme. A partir de la bande transversale 3, de préférence par superposition de deux bandes transversales 3, 3' en mettant les directions des fils en sens opposé, on réalise un ruban continu ou un manchon cylindrique en mettant bout à bout les extrémités 3a, 3b, 3a', 3b' de deux bandes 3, 3', comme indiqué aux fig. 2A–2C.

On obtient ainsi un ruban en boucle fermée 6 à deux couches ou deux nappes.

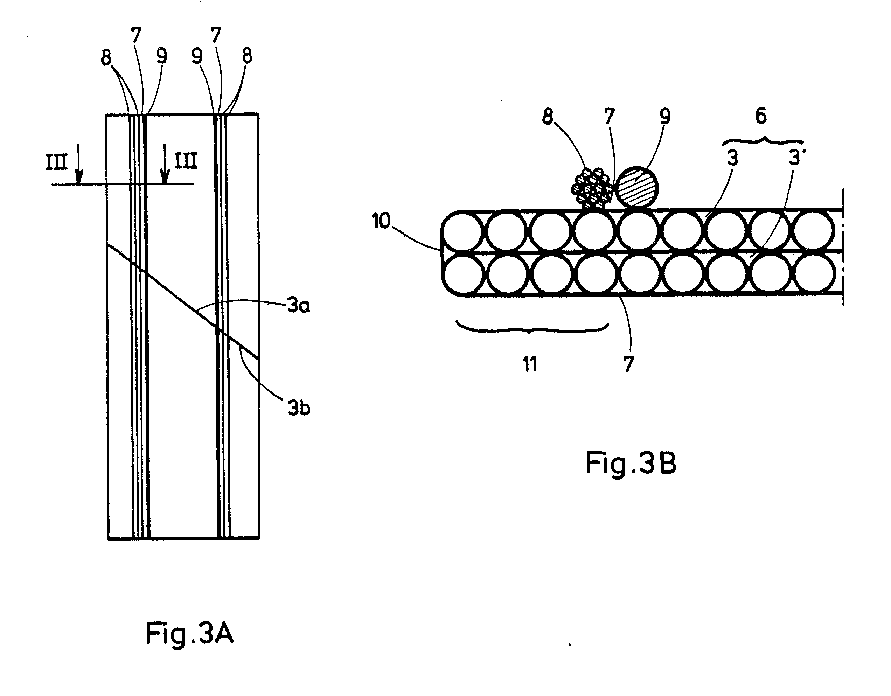

Selon la fig. 3A, sur le ruban 6 (qui est représenté en vue de face), on dévide de part et d'autre et suivant les lignes dites «de rabattement« 7–7, plusieurs spires 8 d'un fil de renforcement très résistant à la traction, pratiquement inextensible, ainsi qu'une cordelette 9.

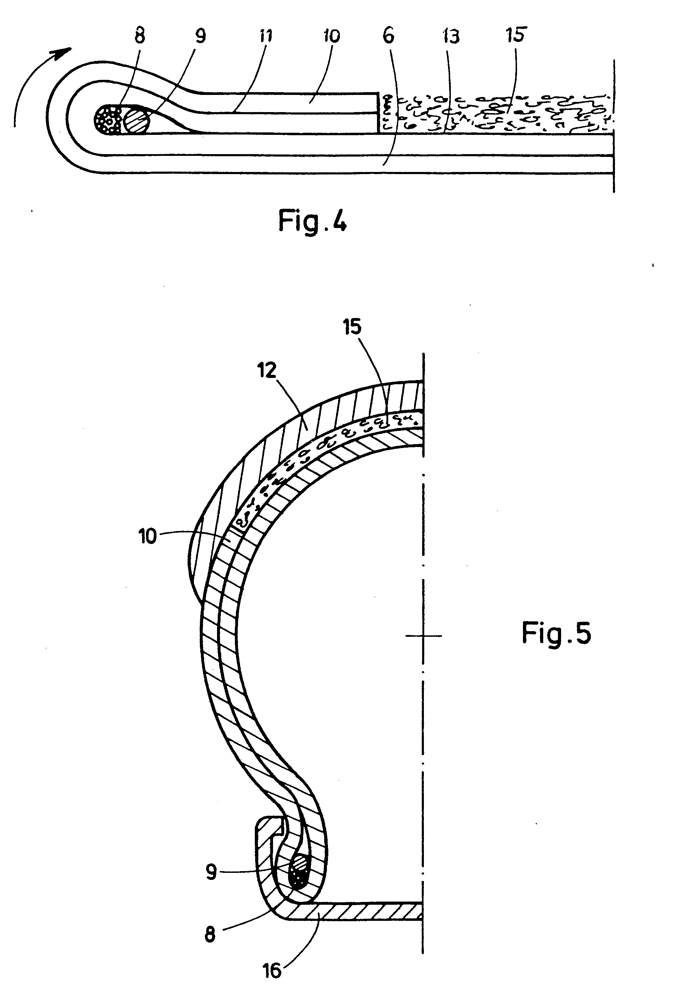

La fig. 3B montre, suivant une demi-coupe selon la ligne III–III de la fig. 3A, la structure ainsi obtenue, c'est-à-dire la disposition des deux nappes 3, 3' formant le rubant continu 6 ainsi que les fils de renforcement 8 et la cordelette 9. La bande 11, comprise entre la ligne de rabattement 7 et le bord extérieur 10 (bord gauche à la fig. 3) de la carcasse, est destinée à être rabattue suivant la ligne de rabattement 7 autour de la cordelette 9 et des fils 8 pour former l'un des talons du pneumatique, comme représenté à la fig. 4.

Au niveau de l'autre ligne de rabattement (non représenté), ce talon se réalise de la même manière.

La dernière phase de fabrication du pneumatique consiste en la mise en place de la bande de roulement 12 qui est collée sur la carcasse réalisée selon la fig. 4, de façon que les deux bords de la bande de roulement 12 chevauchent le bord 10 de la bande latérale 11, après rabattement. On réalise ainsi un pneumatique qui se met en place sur la jante 16, comme cela est représenté à la fig. 5.

L'expression «rabattement vers l'extérieur», utilisée ci-dessus, signifie que la bande 11 est appliquée extérieurement contre le tore 6 obtenu à partir du cylindre sur le côté opposé de celui tourné vers le pneumatique non représenté.

Suivant une variante de réalisation, il peut être intéressant de dévider (fig. 4 et 5) dans la partie médiane en creux 14 délimitée par la partie 6 et les deux bords 10 des parties 11 rabattues, un certain nombre de spires 15 d'un fil très résistant à la traction. Ces fils 15 sont enroulés dans la direction périphérique, c'est-à-dire dans la direction de roulement. Ces enroulements de fils 15 sont déposés avant la mise en place de la bande de roulement 12.

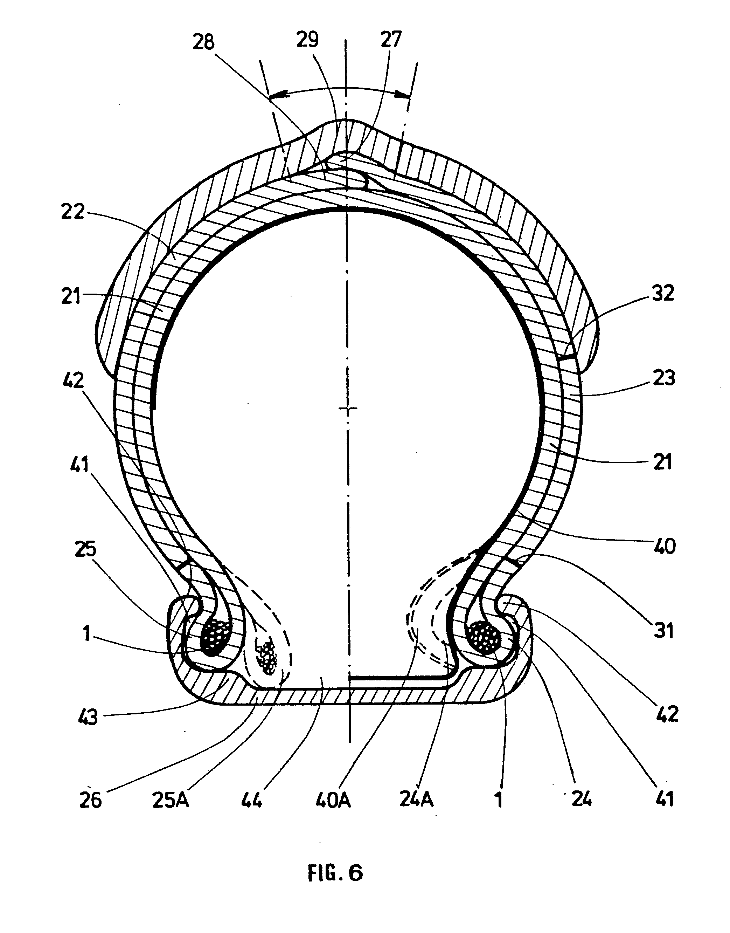

Une variante intéressante du procédé et du pneumatique qui en résulte sera décrite ci-après à l'aide de la fig. 6.

Selon la fig. 6, la variante du procédé ci-dessus consiste à dévider un nombre suffisant de spires de fils de renforcement 1, notamment de fils de fibres synthétiques pratiquement inextensibles, tels que du Kevlar (marque), de façon à permettre le rabattement des bandes latérales 22 et 23 sur la bande médiane 21 pour former les talons 24, 25 du pneumatique. Ces talons servent à la fixation du pneumatique sur la jante 26.

Les parties rabattues 22, 23 sont suffisamment larges pour former des parties 27, 28 qui se chevauchent légèrement sous la bande de roulement 29 de pneumatique dans le plan médian du pneumatique. Le nombre de spires de fils de renforcement 1 est choisi en fonction des efforts auxquels le talon doit résister suivant la pression de gonflement des pneumatiques.

La chambre à air logée dans le pneumatique ainsi réalisé est protégée au niveau de la surface de roulement 30 par un triple couche 21, 22, 29 ou 21, 23, 30. Cela permet d'utiliser des chambres à air en latex qui sont particulièrement légères par comparaison aux chambres à air en caoutchouc du type butyl. Le fil utilisé pour la réalisation de la nappe 21, 22, 23 peut être du fil de matière synthétique pratiquement inextensible tel que Kevlar, ce qui, par comparaison avec un tissage en coton, permet une réduction considérable du poids.

La surface de roulement 30, selon la fig. 6, est particulièrement intéressante car elle présente une légère saillie donnant à la section du pneumatique une forme ovale améliorant son contact avec la route. En effet, cela donne une surface de roulement 30 très étroite. Un tel pneumatique convient particulièrement bien pour la route.

Pour la piste, il peut être suffisant de rabattre les bandes latérales 22, 23 juste suffisamment pour former les talons sans recouvrir l'intégralité des flancs (limite 31).

Suivant une autre variante, on arrête le recouvrement des flancs à la limite 32, sous les bords de la bande de roulement 29. La bande 29 vient alors directement sur la bande médiane 21.

La chambre à air 40, logée dans le pneumatique, prend la forme indiquée dans la moitié droite de la fig. 6 (trait plein); sous l'effet de la pression de l'air, la chambre 40 plaque le talon 24 dans le logement périphérique 41 de la jante 26. Ce logement 41 est délimité par le bord recourbé 42 vers l'intérieur et par un épaulement 43.

Par comparaison, cette partie de la fig. 6 permet de montrer l'effet de pincement exercé par un talon épais 24A, connu (en pointillé) sur la chambre à air 40A (en pointillé) et entraînant une hernie de la chambre 40, 40A. Cette hernie use et perce très rapidement la chambre à air.

La partie gauche de la figure montre deux positions du talon 25 du pneu selon l'invention.

La position en trait plein 25 est la position normale en appui dans le logement 41.

La position en trait pointillé 25A est la position de remontage: le talon 25A se trouve en bas de l'épaulement 43 au fond de la gorge 44 de la jante 26. Pour le remontage du pneu à la main, on repousse une partie de la périphérie du talon 25A au fond de la gorge 44 (la chambre 40 étant dégonflée) de façon à pouvoir très simplement faire passer l'autre partie (diamètralement opposée) du même talon 25A par dessus le bord 42 de la jante, comme cela se fait habituellement avec de petits outils en forme de levier. Cette opération est rendue possible, grâce à la faible épaisseur du talon, bien que les fils du talon soient inextensibles.

## Revendications

1. Procédé de fabrication d'un pneumatique à carcasse non vulcanisée pour roue de bicyclette, à jante étroite, ce pneumatique étant destiné à recevoir une chambre à air, procédé caractérisé en ce qu'on réalise sur un cylindre de bobinage une nappe de fils juxtaposés et collés les uns aux autres, on découpe cette nappe en au moins une bande transversale (3) en forme de parallélogramme, bande dont la longueur est au moins égale au développement du pneumatique à réaliser, et dans lesquelles les segments de fils coupés (2) sont disposés transversalement, parallèlement aux côtés non coupés (3a, 3b) de chaque bande transversale (3), on réunit les extrémités (3a, 3b; 3a', 3b') d'au moins deux bandes (3, 3') superposées pour former un ruban continu en bande fermée (6) formant une carcasse à deux nappes dans lequel les fils des deux nappes se croisent, on dévide de part et d'autre du plan médian, suivant deux lignes de rabattement (7), un fil de renforcement (8) inextensible, très résistant à la traction, suivant plusieurs tours, on rabat les bandes latérales (11) selon chaque ligne de rabattement (7) contre l'extérieur de la carcasse (6) et autour des fils de renforcement (8) pour former les talons du pneumatique destiné à prendre appui sur la jante (13) et on fixe par collage une bande de roulement (12) sur la carcasse (6).

2. Procédé selon la revendication 1, caractérisé en ce qu'on dévide, de part et d'autre du plan médian, une cordelette (9) selon les deux lignes de rabattement.

3. Procédé selon la revendication 1, caractérisé en ce qu'on réalise des bandes latérales (11) de largeur suffisante pour recouvrir les flancs de la carcasse jusque sous la bande de roulement (12).

4. Procédé selon la revendication 2, caractérisé en ce qu'on dévide un fil (15) très résistant à la traction, dans la direction périphérique, sur la carcasse (6) entre les deux bords (10) des bandes latérales (11) après rabattement de celles-ci et on recouvre les spires de fils (15) par la bande de roulement (12).

5. Procédé selon l'une quelconque des revendications 1 à 4, caractérisé en ce qu'on découpe les bandes transversales (3) de façon que les segments de fils soient à 45°.

6. Procédé selon la revendication 1, caractérisé en ce que l'on rabat les bandes latérales (22, 23) sur une largeur suffisante pour qu'elles se chevauchent au niveau de la surface de roulement (27, 28) en formant les talons (24, 25) uniquement par rapattement autour des fils de renforcement (1) et on met en place une bande de roulement, ce qui permet au pneu gonflé de prendre une forme légèrement ovalisée.

7. Procédé selon la revendication 6, caractérisé en ce que les fils de renforcement (1) sont des fils de matière synthétique pratiquement inextensible dans les conditions d'utilisation, tels que du Kevlar (marque).

8. Procédé selon la revendication 6, caractérisé en ce qu'on réalise les nappes formant la bande constituant la carcasse du pneumatique à l'aide d'un fil de matière synthétique inextensible notamment du Kevlar (marque).

9. Pneumatique obtenu par un procédé selon l'une quelconque des revendications 1 à 8, comprenant une carcasse avec des talons entourant du fil de renforcement, caractérisé en ce que la carcasse (6) est formée d'au moins deux bandes transversales (3) de fils dont les directions se croisent, symétriquement par rapport au plan méridien de symétrie du pneumatique, les bandes latérales (11) étant rabattues sur au moins une partie de la hauteur du flanc de la carcasse (6) pour former les talons en entourant plusieurs spires du fil de renforcement des talons (8).

10. Pneumatique selon la revendication 9, caractérisé en ce que la carcasse est formée par une nappe (20) dont les bandes latérales (22, 23) sont rabattues pour couvrir toute la surface latérale ainsi qu'au moins une partie de la surface de roulement.

11. Pneumatique selon la revendication 10, caractérisé en ce que les fils de renforcement (8) sont en une matière synthétique pratiquement non extensible notamment du Kevlar (marque).

## Patentansprüche

1. Verfahren zur Herstellung eines Luftreifens mit einer nicht vulkanisierten Karkasse für das Rad eines Fahrrades mit schmaler Felge wobei der Luftreifen zur Aufnahme einer Luftkammer vorgesehen ist, dadurch gekennzeichnet, dass man auf einem Wickeldorn eine Schicht von nebeneinander liegenden und gegenseitig miteinander verklebten Fäden herstellt, dass man aus dieser Schicht wenigstens ein querverlaufendes Band (3) in Form eines Parallelogrammes ausschneidet, wobei die Länge des Bandes zumindest dem Umfang des herzustellenden Luftreifens entspricht, und wobei die Abschnitte der abgeschnittenen Fäden (2) quer und parallel zu den nichtgeschnittenen Rändern (3a, 3b) jedes Querbandes (3) angeordnet sind, dass man die Enden (3a, 3b; 3a', 3b') von wenigstens zwei Bändern (3, 3') übereinander legt, um einen fortlaufenden Reifen mit einem geschlossenen Band (6) zu bilden, welcher eine Karkasse aus zwei Lagen enthält, in der sich die Fäden der beiden Lagen kreuzen, dass man beiderseits der Mittelebene entlang von zwei Faltlinien (7) einen nicht ausdehnbaren sehr zugfesten Verstärkungsfaden (8) in mehreren Lagen aufwikkelt, dass man Seitenstreifen (11) entlang jeder Faltlinie (7) gegen die Aussenseite der Karkasse (6) und um die Verstärkungsfäden (8) herumfaltet, um Wülste des Luftreifens zu bilden, welche an der Felge (13) anliegen, und dass man durch Klebstoff eine Reifendecke (12) auf der Karkasse (6) befestigt.

2. Verfahren nach Anspruch 1, dadurch gekennzeichnet, dass man beiderseits der Mittelebene eine kleine Schnur (9) entlang den beiden Faltlinien aufwickelt.

3. Verfahren nach Anspruch 1, dadurch gekennzeichnet, dass man die Seitenstreifen (11) in einer, die Flanken der Karkasse bis unter die Reifendecke (12) völlig bedeckenden Grösse herstellt.

4. Verfahren nach Anspruch 2, dadurch gekennzeichnet, dass man einen sehr zugfesten Faden (15) in Umfangsrichtung auf die Karkasse (6) zwischen beide Ränder (10) der Seitenstreifen (11) nach deren Umklappen wickelt, und dass man die Windungen des Fadens (15) mit der Reifendecke (12) abdeckt.

5. Vorrichtung nach einem der vorhergehenden Ansprüche 1 bis 4, dadurch gekennzeichnet, dass man die Querbänder (3) so ausschneidet, dass die Abschnitte der Fäden unter einem Winkel von in etwa 45° verlaufen.

6. Verfahren nach Anspruch 1, dadurch gekennzeichnet, dass man Seitenstreifen (22, 23) in einer Grösse umklappt, die ausreicht, dass diese sich gegenseitig im Bereich der Lauffläche (27, 28) überdecken, wobei gleichzeitig die Wülste (24, 25) beim Umklappen entlang den Verstärkungsfäden (1) gebildet werden, und dass man eine Lauffläche anordnet, die es erlaubt, dass der aufgepumpte Reifen eine leicht ovale Form annimmt.

7. Verfahren nach Anspruch 6, dadurch gekennzeichnet, dass die Verstärkungsfäden (1) aus einem synthetischen während des Gebrauchs praktisch undehnbaren Material bestehen, wie beispielsweise aus Kevlar (Warenzeichen).

8. Verfahren nach Anspruch 6, dadurch gekennzeichnet, dass die Schichten, welche die Streifen bilden, aus denen die Karkasse des Luftreifens gebildet ist, mit Hilfe eines synthetischen undehnbaren Materials hergestellt werden, insbesondere von Kevlar (Warenzeichen).

9. Luftreifen, hergestellt nach einem Verfahren nach einem der vorhergehenden Ansprüche 1 bis 8, aufweisend eine Karkasse mit Verstärkungsfäden umschliessenden Wülsten, dadurch gekennzeichnet, dass die Karkasse (6) aus wenigstens zwei Querbändern (3) mit Fäden besteht, deren Richtungen sich symmetrisch in bezug auf die meridiane Symmetrieebene des Luftreifens kreuzen, dass die Seitenstreifen (11) in einem zumindest der Höhe der Flanke der Karkasse (6) entsprechenden Bereich umgeklappt sind, um die Wülste zu bilden, welche mehrere Windungen von Fäden zur Verstärkung der Wülste (8) umschliessen.

10. Luftreifen nach Anspruch 9, dadurch gekennzeichnet, dass die Karkasse aus einer Schicht (20) gebildet ist, bei der die umgeklappten Seitenstreifen (22, 23) die gesamte seitliche Oberfläche sowie wenigstens einen Abschnitt der Lauffläche bedecken.

11. Luftreifen nach Anspruch 10, dadurch gekennzeichnet, dass die Verstärkungsfäden (8) aus einem synthetischen praktisch nicht dehnbaren Material bestehen, insbesondere aus Kevlar (Warenzeichen).

**Claims**

1. A method of producing a tyre with an unvulcanised casing for a bicycle wheel, with a narrow rim, this tyre being intended to receive an inner tube, the method being characterised by forming a layer of threads, which are juxtaposed and adhered to one another, on a winding cylinder, said layer being cut into a least one transverse strip (3) in the shape of a parallelogram, the length of the strip being at least equal to the girth of the tyre to be formed, and in which the segments of the cut threads (2) are disposed transversely, parallel to the uncut sides (3a, 3b) of each transverse strip (3), the ends (3a, 3b; 3a', 3b') of at least two superimposed strips (3, 3') being joined so as to form a continuous ribbon of closed strip (6) forming a two-layer casing in which the threads of the layers cross one another; unwinding along a plurality of turns, on either side of a centre plane, along two folding lines (7), a non-extensible reinforcing thread (8), which has a high degree of tensile strength; folding the lateral strips (11) along each folding line (7) against the outside of the casing (6) and around the reinforcing threads (8) so as to form tyre beads intended to bear against the rim (13), and fixing a tyre tread (12) on to the casing (6) by adhesion.

2. A method according to claim 1, characterised in that on either side of the centre plane a cord (9) is unwound along the two folding lines.

3. A method according to claim 1, characterised in that lateral strips (11) are formed of sufficient width to cover the walls of the casing as far as under the tyre tread (12).

4. A method according to claim 2, characterised in a thread (15) having high tensile strength is unwound, in peripheral direction, on to the casing (6) between two edges (10) of the lateral strips (11), after the latter have been folded over, and the turns of threads (15) are covered with the tyre tread (12).

5. A method according to any of claims 1 to 4, characterised in that the transverse strips (3) are cut in such a way that the thread segments are at 45°.

6. A method according to claim 1, characterised in that lateral strips (22, 23) are folded over a sufficient width to ensure that they overlap level with the tread surface (27, 28) so as to form the beads (24, 25) solely by folding about the reinforcing threads (1), and a tyre tread is provided which enables the inflated tyre to assume a slightly oval shape.

7. A method according to claim 6, characterised in that the reinforcing threads (1) are threads of synthetic material, which is practically non-extensible under operating conditions, such as Kevlar (trade mark).

8. A method according to claim 6, characterised in that the layers forming the strip constituting the tyre casing are formed by a thread of non-extensible synthetic material, in particular Kevlar (trade mark).

9. A tyre produced by a method according to any of claims 1 to 8, comprising a casing with beads surrounding the reinforcing thread, characterised in that the casing (6) is formed by at least two transverse strips (3) of threads, the directions of which cross one another, symmetrically in relation to the centre plane of symmetry of the tyre, the lateral strips (11) being folded over at least part of the height of the wall of the casing (6) so as to form beads surrounding a plurality of turns of the bead reinforcing threads (8).

10. A tyre according to claim 9, characterised in that the casing is formed by a layer (20) whose lateral strips (22, 23) are folded over to cover all the lateral surface and also at least part of the tread surface.

11. A tyre according to claim 9, characterised in that the reinforcing threads (8) consist of a practically non-extensible synthetic material, in particular Kevlar (trade mark).

Fig.1A

Fig.1B

Fig.2A    Fig.2B    Fig.2C

Fig.3A

Fig.3B

0133093

**Fig.4**

**Fig.5**

FIG. 6